# EUROPÄISCHE PATENTSCHRIFT

(11) **EP 2 810 826 B1**
(45) Veröffentlichungstag und Bekanntmachung des Hinweises auf die Patenterteilung: **23.03.2016**
(21) Anmeldenummer: 14168922.4
(22) Anmeldetag: 20.05.2014
(51) Int. Cl.: B60R 7/04, B60R 5/00

(54) **Fahrzeugsitz oder Sitzbank, insbesondere Doppelsitzbank mit einem verschiebbaren Staufach mit Durchladefunktion**
Vehicle seat or bench seat, in particular double seat bench with a moveable storage compartment with load-through function
Siège de véhicule ou banquette, notamment double banquette ayant un compartiment de rangement mobile avec une fonction de chargement

(30) Priorität: 03.06.2013 DE 102013009329
(43) Veröffentlichungstag der Anmeldung: 10.12.2014
(73) Patentinhaber: Volkswagen Aktiengesellschaft, 38440 Wolfsburg (DE)
(72) Erfinder: Woynowski, Tobias, 30165 Hannover (DE); Stops, Tobias, 39108 Magdeburg (DE)

(56) Entgegenhaltungen:
- DE-A1- 19 752 383
- FR-A1- 2 908 363
- FR-A1- 2 914 597

## Beschreibung

Die Erfindung betrifft einen Fahrzeugsitz oder eine Sitzbank mit mindestens einem unterhalb des Fahrzeugsitzes oder der Sitzbank angeordneten verschiebbaren Staufach, welches zur Beladung mit Ladegut aus seiner Grundposition nach vorne in eine Auszugsposition bringbar ist.

DE 197 52 383 A1 offenbart eine sitzbank nach dem Oberbegriff des Anspruchs 1, sowie eine Fahrzeug nach dem Oberbegriff des Anspruchs 7.

Aus der Druckschrift DE 10 2005 010 434 A1 ist ein Fahrzeug bekannt, welches einen Fahrzeugsitz als Doppelsitz mit einer Rückenlehne und einem Sitzkissen aufweist, wobei das Sitzkissen in eine parallel zu der Rückenlehne verlaufende Verstauposition klappbar ist. Zwischen dem Fahrzeugboden und dem Sitzkissen ist ein allseits, das heißt auf allen vier Seiten, durch massive Seitenwände geschlossenes Staufach angeordnet. Das Staufach wird nach unten durch den Fahrzeugboden und nach oben von dem Sitzkissen begrenzt. Bei dem in Sitzposition abgeklappten Sitzkissen, verschließt dieses das Staufach vollständig.

Das Staufach ist ausschließlich von oben beladbar. Die Druckschrift beschreibt ferner einen Fahrzeugsitz als Einzel-Fahrersitz, mit einem Sockel der eine nach vorne zugängliche Schublade aufweist, wobei die Schublade in den Sockel integriert ist. Die Schublade ist in ihrer Offenposition von oben beladbar.

Bei einem Nutzfahrzeug ist zur Erweiterung des Laderaumes, der mit einer Trennwand von den Fahrzeugsitzen im Fahrerhaus getrennt ist, in der Trennwand eine Durchladeklappe vorgesehen. Im geöffneten Zustand der Durchladeklappe können lange Gegenstände auf die verlängerte Ladefläche geladen werden, wobei ein Teil der Gegenstände unter die vorderen Fahrzeugsitze, insbesondere unter die Beifahrersitze geschoben werden können. Das heißt, die Fahrzeugsitze bilden unterhalb des Sitzkissens einen zusätzlichen Stauraum, wobei der Stauraum in Richtung der Trennwand keine Wand aufweist. Der Stauraum ist somit von hinten zugänglich, wobei die Durchladeklappe beweglich an der Trennwand angeordnet ist. Ferner ist der Stauraum unterhalb des Fahrzeugsitzes auch von oben zugänglich, indem das Sitzteil des jeweiligen Fahrzeugsitzes analog zu der Lösung in der Druckschrift DE 10 2005010434 A1 nach oben parallel zu der Rückenlehne aufklappbar ist. Der Stauraum ist somit von hinten in horizontaler und von oben in vertikaler Richtung beladbar. Die Beladungslänge von hinten nach vorne in horizontaler Richtung wird durch ein Schließblech begrenzt, welches in etwa an der gedachten vertikalen Verlängerung der Vorderkante des jeweiligen Fahrzeugsitzes angeordnet ist. Das heißt, die Gegenstände können nur bis zur Vorderkante des jeweiligen Fahrzeugsitzes in dem Stauraum eingeschoben werden. Eine darüber hinaus gehende Anordnung ist nicht möglich.

Der Erfindung liegt die Aufgabe zugrunde, für einen Fahrzeugsitz oder eine Sitzbank, insbesondere eine Doppelsitzbank mindestens ein Staufach mit einer möglichst großen Durchladelänge zu schaffen.

Ausgangspunkt der Erfindung ist ein Fahrzeugsitz oder eine Sitzbank mit mindestens einem unterhalb des Fahrzeugsitzes oder der Sitzbank angeordneten, verschiebbaren Staufach, welches zur Beladung mit Ladegut aus seiner Grundposition nach vorne in eine Auszugsposition bringbar ist.

Erfindungsgemäß ist vorgesehen, dass das mindestens eine verschiebbare Staufach auf seiner an einen Ladegutraum angrenzenden Seite ein öffenbares Schließelement aufweist, wodurch das mindestens eine verschiebbare Staufach in vorteilhafter Weise in verschiedenen Beladungsmöglichkeiten beladbar ist, wobei insbesondere eine Durchladung von langen Gegenständen ermöglicht wird.

In vorteilhafter Weise erhöht sich insgesamt die Vielfalt der Nutzungsmöglichkeiten wie nachfolgend erläutert wird.

Zunächst wird davon ausgegangen, dass das Staufach unterhalb eines Sitzteiles des Fahrzeugsitzes oder der Sitzbank angeordnet ist, wobei das Sitzteil gegenüber dem Rückenlehnenteil unbeweglich angeordnet ist.

Erfindungsgemäß ergibt sich eine Beladungsmöglichkeit, bei der das mindestens eine verschiebbare Staufach vor dem Fahrzeugsitz beziehungsweise vor der Sitzbank in seiner Auszugsposition angeordnet ist und bei dem sich das Schließelement in einer Schließlage befindet. Bei dieser Beladungsmöglichkeit ist das mindestens eine Staufach von seiner Oberseite aus beladbar.

Erfindungsgemäß ergibt sich eine weitere Beladungsmöglichkeit, bei der das mindestens eine verschiebbare Staufach in seiner Grundposition unterhalb des Fahrzeugsitzes beziehungsweise unterhalb der Sitzbank angeordnet ist und bei dem sich das Schließelement in einer Offenlage befindet. Bei dieser weiteren Beladungsmöglichkeit ist das mindestens eine Staufach von seiner Rückseite aus beladbar. Grenzt an die Rückseite des mindestens einen Staufaches ein Ladegutraum an, so ergibt sich eine erste Durchladefunktion, bei der Gegenstände aus dem Ladegutraum in das mindestens eine Staufach in seiner Grundposition einschiebbar sind. Die Ladegutlänge ergibt sich somit aus der Länge des Ladegutraumes und der Länge des mindestens einen Staufaches in Einschubrichtung. In vorteilhafter Weise kann Ladegut verladen werden, dessen Länge über die Länge des Ladegutraumes hinausgeht, wobei die darüber hinausgehende Länge von der Länge des mindestens einen Staufaches in Einschubrichtung abhängt.

Erfindungsgemäß ergibt sich eine noch weitere Beladungsmöglichkeit, bei der das mindestens eine verschiebbare Staufach in seiner Auszugsposition vor dem Fahrzeugsitz beziehungsweise vor der Sitzbank angeordnet ist und bei dem sich das Schließelement ebenfalls in der Offenlage befindet. Bei dieser noch weiteren Beladungsmöglichkeit ist das mindestens eine Staufach ebenfalls von seiner Rückseite aus beladbar. Grenzt an die Rückseite des mindestens einen Staufaches ein Ladegutraum an, so ergibt sich eine zweite Durchladefunktion, bei der gegenüber der ersten Durchladefunktion noch längere Gegenstände aus dem Ladegutraum in das mindestens eine Staufach in seiner Auszugsposition einschiebbar sind. Die Ladegutlänge ergibt sich nämlich jetzt aus der Länge des Ladegutraumes und der Länge des mindestens einen Staufaches in Einschubrichtung sowie der Auszugslänge des mindestens einen Staufaches in die Auszugsposition. In vorteilhafter Weise kann Ladegut verladen werden dessen Länge über die Länge des Ladegutraumes hinausgeht, wobei die darüber hinausgehende Länge von der Länge des mindestens einen Staufaches in Einschubrichtung und der möglichen Auszugslänge des mindestens einen Staufaches von seiner Grundposition in seine Auszugsposition abhängt.

Weitere bevorzugte Ausgestaltungen der Erfindung ergeben sich aus den übrigen, in den Unteransprüchen genannten Merkmalen und aus der nachfolgenden Beschreibung.

Die Erfindung wird nachfolgend in Ausführungsbeispielen anhand der zugehörigen Zeichnungen erläutert. Es zeigen:
- Figur 1: stellvertretend für einen Einzel-Fahrzeugsitz, eine Doppelsitzbank mit einem ersten und zweiten verschiebbaren Staufach, wobei das erste Staufach mit einem Schließelement ausgestattet ist, welches sich in einer Schließlage befindet und in Grundposition und in Auszugsposition dargestellt ist, wobei das zweite Staufach nur in Grundposition dargestellt ist;
- Figur 2: die beiden Staufächer in Grundposition, wobei das erste der beiden Staufächer das rückseitige Schließelement aufweist, welches jetzt in Offenlage angeordnet und wodurch eine erste Durchladefunktion geschaffen ist;
- Figur 3: die beiden Staufächer, wobei das erste der beiden Staufächer mit dem rückseitigen Schließelement jetzt in Auszugsposition dargestellt ist, wobei das rückseitige Schließelement in Offenlage angeordnet und wodurch eine zweite Durchladefunktion geschaffen ist.

Die Erfindung wird nachfolgend erläutert. Für die Zwecke der nachfolgenden Beschreibung soll mit "+x" ("plus x") die übliche Fahrtrichtung eines Fahrzeugs bezeichnet werden, mit "-x" ("minus x") die Richtung entgegen seiner üblichen Fahrtrichtung, mit "y" wird die Richtung in der Horizontalen quer zur x-Richtung bezeichnet, und mit "z" wird die Richtung in der Vertikalen quer zur x-Richtung bezeichnet. Diese Bezeichnungsweise der Raumrichtungen in kartesischen Koordinaten entspricht dem in der Kraftfahrzeugindustrie allgemein verwendeten Koordinatensystem. Innerhalb aller Figuren werden nachfolgend die gleichen Bezugszeichen für gleiche Baumteile verwendet, wobei gegebenenfalls nicht in jeder Figur erneut alle bereits vorgestellten Bauteile anhand der Bezugszeichen nochmals erläutert werden.

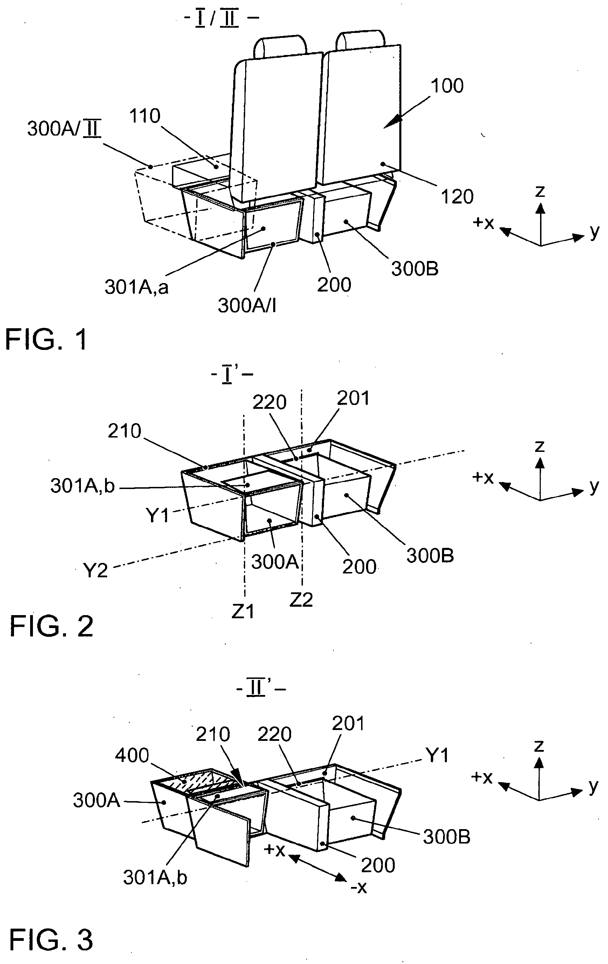

Figur 1 zeigt stellvertretend für einen Einzel-Fahrzeugsitz 100 eine Doppelsitzbank 100' mit zwei verschiebbaren Staufächern 300A, 300B jeweils in ihrer Grundposition I.

Ein erstes Staufach 300A umfasst ein Schließelement 301A, welches sich in Figur 1 in einer Schließlage a befindet.

Das erste Schließelement 301A des ersten verschiebbaren Staufaches 300A befindet sich in der ebenfalls in Figur 1 dargestellten in + x-Richtung vorgenommenen Auszugsposition II ebenfalls noch in der Schließlage a.

Das zweite verschiebbare Staufach 300B umfasst im dargestellten Ausführungsbeispiel, kein Schließelement.

Dadurch wird verdeutlicht, dass beispielsweise unter einem Fahrzeugsitz 100 erfindungsgemäß mindestens ein Staufach 300A angeordnet ist oder beispielsweise unter einer mehrsitzigen Sitzbank, insbesondere der dargestellten Doppelsitzbank 100' mehrere quer zur Fahrtrichtung x in y-Richtung nebeneinander liegende Staufächer 300A, 300B anordbar sind, wobei wie dargestellt ist, erfindungsgemäß mindestens eines der verschiebbaren Staufächer 300A ein öffenbares Schließelement 301 A aufweist.

Es wird ferner deutlich, dass die Staufächer in unterschiedlichen Ausgestaltungen mit einem Schließelement versehen sind oder kein Schließelement aufweisen. Die Staufächer sind miteinander kombiniert anordbar, so dass wie im Ausführungsbeispiel dargestellt, ein erstes Staufach 300A mit einem Schließelement 301A neben einem zweiten Staufach 300B angeordnet ist, welches kein Schließelement 301A aufweist.

In einer bevorzugten Ausgestaltung der Erfindung sind beide Staufächer 300A, 300B, anders als dargestellt, mit einem Schließelement versehen.

Eine weitere, in Kombination ausführbare Ausgestaltungsvariante ergibt sich dadurch, dass die Staufächer 300A, 300B in y-Richtung, horizontal quer zur Fahrtrichtung x unterschiedlich breit ausgebildet sind.

Eine noch weitere in Kombination ausführbare Ausgestaltungsvariante ergibt sich dadurch, dass die Höhe der Staufächer variiert, so dass sich Staufächer 300A, 300B vertikal quer zur Fahrtrichtung x in z-Richtung eine unterschiedliche Höhe aufweisen.

Wie in den Figuren 1 bis 3 gezeigt ist, weist das erste Staufach 300A eine erste Höhe auf, während das zweite Staufach 300B eine zweite Höhe aufweist, die gegenüber der ersten Höhe geringer ist.

Dadurch wird bei dem ersten Staufach 300A der beiden Staufächer 300A, 300B auf der Vorderseite kein Blendenelement angeordnet. Auf der Vorderseite des Sitzunterbaus ist eine erste Öffnung 210 in der Größe der Vorderwand des ersten Staufaches 300A vorgesehen, so dass die Vorderwand des ersten Staufaches 300A in der jeweiligen Grundposition I, I' des ersten Staufaches 300A den vorderen Abschluss des Sitzunterbaus ausbildet.

Dadurch wird bei dem zweiten Staufach 300B der beiden Staufächer 300A, 300B auf der Vorderseite ein vorderes Blendenelement 201 angeordnet, das eine Ausnehmung aufweist. Auf der Vorderseite des Sitzunterbaus ist somit eine zweite Öffnung 220 in der Größe des eine zweite Höhe aufweisenden vorderen Blendenelementes 201 des zweiten Staufaches 300B vorgesehen, so dass die Fläche des vorderen Blendenelementes 201 und die Fläche der Vorderwand des zweiten Staufaches 300B in den Grundpositionen I, I' des zweiten Staufaches 300B gemeinsam den im Wesentlichen in einer Ebene liegenden vorderen Abschluss des Sitzunterbaus ausbilden.

Das vordere Blendenelement 201 und die anderen seitlichen Blendenelemente sind beispielsweise an dem nicht näher dargestellten Sitzuntergestell befestigt.

Das erste Staufach 300A kann analog zu dem zweiten Staufach 300B mit einem vorderen Blendenelement 201 mit einer zweiten Öffnung 220 versehen sein.

In einem weiteren ebenfalls nicht dargestellten Ausführungsbeispiel kann ein einziges verschiebbares Staufach ausgebildet werden, welches die Größe der in Figur 1 dargestellten beiden Staufächer 300A, 300B aufweist, so dass dieses vergrößerte verschiebbare Staufach eine Größe aufweist, die den Raum unterhalb von zwei nebeneinander liegenden Sitzteilen 110 einer Doppelsitzbank 100' einnimmt. Bei diesem Ausführungsbeispiel wird das Schließelement auf der gesamten Rückseite des vergrößerten verschiebbaren Staufaches ausgebildet, so dass sich in vorteilhafter Weise eine große insbesondere in Querrichtung y erstreckende Öffnung für Ladegut ergibt, sobald das Schließelement seine Offenlage b einnimmt.

Die Figur 1 zeigt die beiden Staufächer 300A, 300B unterhalb eines Sitzteiles 110 einer Doppelsitzbank 100', die ein Rückenlehnenteil 120 umfasst. Das dargestellte Sitzteil 110 und das dargestellte Rückenlehnenteil 120 sind in Figur 1 einteilig ausgebildet und dargestellt.

Die Fläche des Sitzteiles 110 bildet somit eine Art Deckel für die sich unterhalb des Sitzteiles 110 befindenden verschiebbaren Staufächer 300A, 300B. Die Staufächer 300A, 300B sind im Wesentlichen zwischen dem Fahrzeugboden und der Unterseite des Sitzteiles 110 angeordnet. Erfindungsgemäß ist vorgesehen, dass die verschiebbaren Staufächer 300A, 300B in das Sitzuntergestell des Fahrzeugsitzes 100 oder der Sitzbank 100' integriert oder modular integrierbar sind.

Bekannt ist es, keine Sitzuntergestelle zu verwenden, sondern Sitzkästen auszubilden, wobei die Wandungen der Sitzkästen umlaufend unterhalb des Sitzteiles 110 angeordnet sind und somit eine Vorderwand und gegenüberliegend eine Rückwand sowie sich gegenüberliegende Seitenwände umfassen.

Erfindungsgemäß ist vorgesehen, dass mit dem öffenbaren Schließelement 301A die Staufächer 300A, 300B in einen als Sitzuntergestell ausgebildeten Sitzkasten 200 des Fahrzeugsitzes 100 oder der Sitzbank 100' integriert oder modular integrierbar sind, wobei im Unterschied zum Stand der Technik keine Rückwand ausgebildet ist, um die Zugänglichkeit zu dem Stauraum des mindestens einen ersten verschiebbaren Staufaches 300A zu gewährleisten.

Analog zu der oben erläuterten Anordnung der Blendenelemente umfasst der Sitzkasten bei Anordnung des ersten Staufaches 300A keine Vorderwand, da die Vorderwand des ersten Staufaches 300A in die erste Öffnung 210 des Sitzkastens ragt und so die Vorderwand des Sitzkastens ausbildet. Bei Anordnung des zweiten Staufaches 300B weist die Vorderwand des Sitzkastens analog zur vorherigen Beschreibung eine Ausnehmung mit der zweiten Öffnung 220 auf, wobei die Vorderwand des zweiten Staufaches 300B in die zweite Öffnung 220 ragt, so dass die Vorderwand des Sitzkastens und die Vorderwand des zweiten Staufaches gemeinsam die im Wesentlichen ebene Vorderfläche des als Sitzkasten ausgebildeten Sitzunterbaus ausbilden.

Bei einer nicht näher dargestellten Modulvariante weist das Sitzuntergestell oder der als Sitzuntergestell ausgebildete Sitzkasten des Fahrzeugsitzes eine modulare Aufnahme auf, in dem das als Modul ausgestaltete mindestens eine verschiebbare Staufach 300A, 300B reversibel angeordnet ist.

Gemäß Figur 1 ist das erste verschiebbare Staufach 300A bei einem nicht klappbaren, das heißt fest angeordneten Sitzteil 110, des Fahrzeugsitzes 100 oder der Doppelsitzbank 100' nur in seiner Auszugsposition II von oben beladbar. Das Schließelement 301A befindet sich dabei in der Schließlage a.

Analog dazu ist das zweite verschiebbare Staufach 300B bei einem nicht klappbaren, das heißt fest angeordneten Sitzteil 110, ebenfalls nur in seiner Auszugsposition II von oben beladbar.

Insofern der Fahrzeugsitz 100 oder die Sitzbank 100' ein parallel zu einem Rückenlehnenteil 120 in eine Verstauposition aufklappbares Sitzteil 110 aufweist, sind die verschiebbaren Staufächer 300A, 300B bei einem Sitzteil 110 in der Verstauposition auch in ihrer Grundposition I von oben beladbar, wobei sich dabei das Schließelement 301A in Schließlage a befindet.

Es versteht sich, dass das Sitzteil 110 einer zwei Fahrzeugsitze 100 umfassenden Doppelsitzbank 100' einteilig sein kann. Wird das einteilige Sitzteil 110 in die Verstauposition gebracht, so sind beide Staufächer 300A, 300B in ihrer Grundposition I gleichzeitig von oben zugänglich und von oben beladbar.

Es versteht sich, dass das Sitzteil 110 einer zwei Fahrzeugsitze 100 umfassenden Doppelsitzbank 100' zweiteilig sein kann. Wird eines der beiden Sitzteile 110 in die Verstauposition gebracht, so ist eines der beiden Staufächer 300A, 300B in seiner Grundposition I von oben zugänglich und von oben beladbar.

Figur 2 zeigt die beiden Staufächer 300A, 300B unterhalb der Doppelsitzbank 100' nach Figur 1, wobei das erste Staufach 300A in Grundposition I' mit geöffnetem Schließelement 301A angeordnet ist. Das erste Staufach 300A umfasst das Schließelement 301A, welches als rückseitiges Schließelement 301A ausgebildet ist. Das rückseitige Schließelement 301A befindet sich in Figur 2 jetzt in seiner Offenlage b.

Daraus ergibt sich in vorteilhafter Weise der Effekt, dass in einem nicht näher dargestellten Fahrzeug, von dem an die Rückseite des ersten Staufaches 300A angrenzenden Ladegutraum aus, in einer ersten Durchladefunktion Ladegut im Ladegutraum und im ersten verschiebbaren Staufach 300A anordbar ist.

Das heißt, dass bezüglich der Längsrichtung x des Fahrzeuges Ladegut von hinten nach vorne in das erste Staufach 300A einschiebbar ist, während das erste Staufach 300A in seiner Grundposition I' angeordnet ist und während sich das Schließelement 301A in Offenlage b befindet.

Im dargestellten Ausführungsbeispiel ist das Schließelement 301A als Klappe ausgebildet, wobei eine erste Klappachse Y1 ausgebildet ist, die an der Oberkante der Rückseite des ersten Staufaches 300A verläuft.

In einer nicht näher dargestellten zweiten Ausführungsvariante ist das Schließelement 301A ebenfalls als Klappe ausgebildet, wobei die zu der zweiten Ausführungsvariante gehörende zweite Klappachse Y2 beispielsweise an der Unterkante der Rückseite des ersten Staufaches 300A ausgebildet ist. Wird die Klappe in ihrer Offenlage b in dem angrenzenden Ladegutraum geklappt, so bildet sich in Einschubrichtung + x vor dem ersten Staufach 300A in vorteilhafter Weise eine Laderampe aus.

In einer weiteren Ausführungsvariante kann das Schließelement 301 A um die Achse Z1 oder Z2 klappbar sein.

Figur 3 zeigt die beiden Staufächer 300A, 300B unterhalb der Doppelsitzbank 100' nach Figur 2, wobei das erste Staufach 300A im Unterschied zu Figur 2 jetzt in Auszugsposition II' mit geöffnetem Schließelement 301A angeordnet ist. Das erste Staufach 300A umfasst das Schließelement 301A, welches als rückseitiges Schließelement 301A ausgebildet ist. Das rückseitige Schließelement 301A befindet sich in Figur 3 weiterhin in seiner Offenlage b.

Daraus ergibt sich in vorteilhafter Weise der Effekt, dass in einem nicht näher dargestellten Fahrzeug, von dem an die Rückseite des ersten Staufaches 300A angrenzenden Ladegutraum aus, in einer zweiten Durchladefunktion Ladegut im Ladegutraum und unterhalb des Sitzteiles 110 sowie im von der Grundposition I' bis in die Auszugsposition II' verschobenen ersten Staufach 300A anordbar ist.

Das heißt, dass bezüglich der Längsrichtung x des Fahrzeuges Ladegut von hinten nach vorne in das erste Staufach 300A einschiebbar ist, während das erste Staufach 300A in seiner Auszugsposition II' vor der Doppelsitzbank 100' angeordnet ist und während sich das Schließelement 301 A weiterhin in der Offenlage b befindet.

Bei der zweiten Durchladefunktion ist somit gegenüber der ersten Durchladefunktion noch längeres Ladgut verladbar.

Ergänzend dazu ist erfindungsgemäß vorgesehen, dass die verschiebbaren Staufächer 300A, 300B zur Sicherung der Position der in die jeweilige Auszugsposition II, II' verschobenen Staufächer 300A, 300B entriegelbare Sperrelemente vorgesehen sind, die die Staufächer 300A, 300B reversibel gegen Verschieben sichern. Es versteht sich, dass die Staufächer auch in der jeweiligen Grundposition I, I' gegen Verschieben durch entriegelbare Sperrelemente gesichert sind.

Ergänzend ist ferner erfindungsgemäß vorgesehen, dass das mindestens eine mit einem Schließelement 301 A versehene, verschiebbare erste Staufach 300A, welches die beschriebene Durchladefunktion in Auszugsposition II' des ersten Staufaches 300A ermöglicht, eine Ladegutsicherung 400 aufweist. Die Ladegutsicherung 400 ist in Figur 3 angedeutet.

Vorgeschlagen wird ein ausziehbares Rollo, welches die Oberseite des ersten Staufaches 300A in den Auszugspositionen II, II' sichert. Insbesondere, wenn in der zweiten Durchladefunktion das erste Staufach 300A nach vorne in Auszugsposition II, II' verschoben und dort verriegelt ist, sorgt das Rollo dafür, dass das Ladegut in dem ersten Staufach 300A gesichert ist.

Als Ausführungsvariante wird eine Art Skisack vorgeschlagen, der innerhalb des ersten Staufaches 300A angeordnet ist und der ein Austreten von in das erste Staufach 300A durchgeschobenen Ladegut aus der nach oben offenen Öffnung des sich in der Auszugsposition II' befindenden ersten Staufaches 300A verhindert.

### Bezugszeichenliste

- 100: Fahrzeugsitz
- 100': Doppelsitzbank
- 110: Sitzteil
- 120: Rückenlehnenteil
- 200: Blendenelemente
- 201: vorderes Blendenelement
- 210: erste Öffnung
- 220: zweite Öffnung
- 300A: erstes Staufach
- 300B: zweites Staufach
- 301A: Schließelement
- 400: Ladegutsicherung
- I: Staufach in Grundposition in Schließlage a
- II: Staufach in Auszugsposition in Schließlage a
- I': Staufach in Grundposition in Offenlage b (erste Durchladefunktion)
- II': Staufach in Auszugsposition in Offenlage b (zweite Durchladefunktion)
- a: Schließlage
- b: Offenlage
- +x: Richtung in der übliche Fahrtrichtung eines Fahrzeugs
- -x: Richtung entgegen der üblichen Fahrtrichtung +x
- y: Richtung in der Horizontalen quer zur x-Richtung
- z: Richtung in der Vertikalen quer zur x-Richtung
- Y1: erste Klappachse
- Y2: zweite Klappachse
- Z1: Achse
- Z2: Achse

## Patentansprüche

1. Fahrzeugsitz (100) oder Sitzbank (100') mit mindestens einem unterhalb des Fahrzeugsitzes (100) oder der Sitzbank (100') angeordneten verschiebbaren Staufach (300A, 300B), welches zur Beladung mit Ladegut aus seiner Grundposition (I) nach vorne in eine Auszugsposition (II) bringbar ist,
**dadurch gekennzeichnet, dass**
das mindestens eine verschiebbare Staufach (300A, 300B) auf seiner an einen Ladegutraum angrenzenden Seite ein öffenbares Schließelement (301A) aufweist, wodurch das mindestens eine verschiebbare Staufach (300A)
- in seiner Auszugsposition (II) bei einem Schließelement (301A) in Schließlage (a) von oben beladbar und
- in seiner Grundposition (I') bei einem Schließelement (301A) in Offenlage (b) vom angrenzenden Ladegutraum aus in einer ersten Durchladefunktion beladbar und
- in seiner Auszugsposition (II') bei einem Schließelement (301A) in Offenlage (b) vom Ladegutraum aus in einer zweiten Durchladefunktion beladbar ist.

2. Fahrzeugsitz (100) oder Sitzbank (100') nach Anspruch 1,
**dadurch gekennzeichnet, dass**
der Fahrzeugsitz (100) oder die Sitzbank (100') ein parallel zu einem Rückenlehnenteil (120) in einer Verstauposition aufklappbares Sitzteil (110) aufweist, wodurch das mindestens eine verschiebbare Staufach (300A, 300B) bei einem Sitzteil (110) in Verstauposition auch
- in seiner Grundposition (I) bei einem Schließelement (301A) in Schließlage (a) von oben beladbar ist.

3. Fahrzeugsitz (100) oder Sitzbank (100') nach einem der Ansprüche 1 oder 2,
**dadurch gekennzeichnet, dass**
das mindestens eine verschiebbare Staufach in der jeweiligen Auszugsposition (II, II') mittels eines entriegelbaren Sperrelementes gegen Verschieben gesichert ist.

4. Fahrzeugsitz (100) oder Sitzbank (100') nach einem der Ansprüche 1 oder 2,
**dadurch gekennzeichnet, dass**
das mindestens eine verschiebbare Staufach (300A, 300B) in ein Sitzuntergestell des Fahrzeugsitzes (100) oder der Sitzbank (100') integriert oder modular integrierbar ist.

5. Fahrzeugsitz (100) oder Sitzbank (100') nach einem der Ansprüche 1 oder 2,
**dadurch gekennzeichnet, dass**
das mindestens eine verschiebbare Staufach (300A, 300B) in einen als Sitzuntergestell ausgebildeten Sitzkasten (200) des Fahrzeugsitzes (100) oder der Sitzbank (100') integriert oder modular integrierbar ist.

6. Fahrzeugsitz (100) oder Sitzbank (100') nach einem der Ansprüche 4 oder 5,
**dadurch gekennzeichnet, dass**
das Sitzuntergestell oder der als Sitzuntergestell ausgebildete Sitzkasten (200) des Fahrzeugsitzes (100) eine modulare Aufnahme aufweist, in dem das als Modul ausgestaltete mindestens eine verschiebbare Staufach (300A, 300B) anordbar ist.

7. Fahrzeug,
**dadurch gekennzeichnet, dass**
in einem Fahrerraum ein Fahrzeugsitz (100) oder eine Sitzbank (100') nach einem der Ansprüche 1 bis 6 angeordnet ist unter dem/der mindestens ein verschiebbares Staufach (300A, 300B) angeordnet ist, welches auf seiner an einen Ladegutraum angrenzenden Seite ein öffenbares Schließelement (301A) aufweist.

## Claims

1. Vehicle seat (100) or seat bench (100') with at least one movable storage compartment (300A, 300B) which is arranged below the vehicle seat (100) or the seat bench (100') and, for loading with a load, can be brought forwards out of the basic position (I) thereof into an extension position (II), **characterized in that** the at least one movable storage compartment (300A, 300B) has an openable closing element (301A) on the side thereof adjacent to a loading space, as a result of which the at least one movable storage compartment (300A)
- in the extension position (II) thereof and with a closing element (301A) in the closed position (a), can be loaded from above, and
- in the basic position (I') thereof and with a closing element (301A) in an open position (b), can be loaded from the adjacent loading space in a first load-through function, and
- in the extension position (II') thereof and with a closing element (301A) in an open position (b), can be loaded from the loading space in a second load-through function.

2. Vehicle seat (100) or seat bench (100') according to Claim 1, **characterized in that** the vehicle seat (100) or the seat bench (100') has a seat part (110) which can be swung open parallel to a backrest part (120) in a storage position, as a result of which, with a seat part (110) in the storage position, the at least one movable storage compartment (300A, 300B) also
- in the basic position (I) thereof, with a closing element (301A) in the closed position (a), can be loaded from above.

3. Vehicle seat (100) or seat bench (100') according to either of Claims 1 and 2, **characterized in that** the at least one movable storage compartment is secured against moving in the respective extension position (II, II') by means of an unlockable locking element.

4. Vehicle seat (100) or seat bench (100') according to either of Claims 1 and 2, **characterized in that** the at least one movable storage compartment (300A, 300B) is integrated or can be integrated modularly into a seatunder frame of the vehicle seat (100) or of the seat bench (100').

5. Vehicle seat (100) or seat bench (100') according to either of Claims 1 and 2, **characterized in that** the at least one movable storage compartment (300A, 300B) is integrated or can be integrated modularly into a seat box (200), which is in the form of a seat underframe, of the vehicle seat (100) or of the seat bench (100').

6. Vehicle seat (100) or seat bench (100') according to either of Claims 4 and 5, **characterized in that** the seat underframe or the seat box (200), which is in the form of a seat underframe, of the vehicle seat (100) has a modular receptacle in which the at least one movable storage compartment (300A, 300B) configured as a module can be arranged.

7. Vehicle, **characterized in that** a vehicle seat (100) or a seat bench (100') and according to one of Claims 1 to 6 is arranged in a driver's compartment, and at least one movable storage compartment (300A, 300B) which has an openable closing element (301A) on the side thereof adjacent to a loading space is arranged under said vehicle seat (100) or seat bench (100').

## Revendications

1. Siège de véhicule (100) ou banquette de siège (100') comprenant au moins un compartiment de rangement coulissant (300A, 300B) disposé sous le siège de véhicule (100) ou sous la banquette de siège (100'), qui peut être amené de sa position de base (I) vers l'avant dans une position sortie (II) pour le chargement avec des marchandises,
caractérisé(e) en ce que
l'au moins un compartiment de rangement coulissant (300A, 300B) présente sur son côté adjacent un espace pour marchandises, un élément de fermeture (301A) pouvant être ouvert, de sorte que l'au moins un compartiment de rangement coulissant (300A)
- dans sa position sortie (II), puisse être chargé par le haut lorsqu'un élément de fermeture (301A) est dans la position de fermeture (a) et
- dans sa position de base (I') lorsqu'un élément de fermeture (301A) est dans la position ouverte (b), puisse être chargé à partir de l'espace pour marchandises adjacent dans une première fonction de rabattement pour chargement et
- dans sa position sortie (II') lorsqu'un élément de fermeture (301A) est dans la position ouverte (b), puisse être chargé à partir de l'espace pour marchandises dans une deuxième fonction de rabattement pour chargement.

2. Siège de véhicule (100) ou banquette de siège (100') selon la revendication 1,
caractérisé(e) en ce que
le siège de véhicule (100) ou la banquette de siège (100') présente une partie de siège (110) pouvant être rabattue vers le haut dans une position de rangement parallèlement à une partie de dossier (120), de sorte que l'au moins un compartiment de rangement coulissant (300A, 300B), lorsqu'une partie de siège (110) se trouve dans la position de rangement, puisse également
- être chargé par le haut dans sa position de base (I) lorsqu'un élément de fermeture (301A) est dans la position de fermeture (a).

3. Siège de véhicule (100) ou banquette de siège (100') selon l'une quelconque des revendications 1 ou 2,
caractérisé(e) en ce que
l'au moins un compartiment de rangement coulissant est fixé contre un coulissement dans la position sortie respective (II, II') au moyen d'un élément de verrouillage déverrouillable.

4. Siège de véhicule (100) ou banquette de siège (100') selon l'une quelconque des revendications 1 ou 2,
caractérisé(e) en ce que
l'au moins un compartiment de rangement coulissant (300A, 300B) est intégré ou peut être intégré de manière modulaire dans un châssis de siège du siège de véhicule (100) ou de la banquette de siège (100').

5. Siège de véhicule (100) ou banquette de siège (100') selon l'une quelconque des revendications 1 ou 2,
caractérisé(e) en ce que
l'au moins un compartiment de rangement coulissant (300A, 300B) est intégré ou peut être intégré de manière modulaire dans une boîte de siège (200) du siège de véhicule (100) ou de la banquette de siège (100') réalisée sous forme de châssis de siège.

6. Siège de véhicule (100) ou banquette de siège (100') selon l'une quelconque des revendications 4 ou 5,
caractérisé(e) en ce que
le châssis de siège ou la boîte de siège (200) du siège de véhicule (100) réalisée sous forme de châssis de siège présente un logement modulaire dans lequel peut être disposé l'au moins un compartiment de rangement coulissant (300A, 300B) configuré sous forme de module.

7. Véhicule,
**caractérisé en ce que**
dans un espace de conducteur est disposé un siège de véhicule (100) ou une banquette de siège (100') selon l'une quelconque des revendications 1 à 6, sous lequel/laquelle est disposé au moins un compartiment de rangement coulissant (300A, 300B) qui présente, sur son côté adjacent à un espace pour marchandises, un élément de fermeture (301A) pouvant être ouvert.
